# EUROPEAN PATENT SPECIFICATION

(11) **EP 1 274 557 B1**
(45) Date of publication and mention of the grant of the patent: **11.02.2004**
(21) Application number: 01909817.7
(22) Date of filing: 03.03.2001
(51) Int. Cl.: B29C 45/27

(54) **NOZZLE FOR THE INJECTION OF PLASTIC SUBSTANCE**
DÜSE ZUM SPRITZGIESSEN EINER PLASTISCHEN SUBSTANZ
BUSE D'INJECTION D'UNE SUBSTANCE PLASTIQUE

(30) Priority: 20.04.2000 IT PN000025
(43) Date of publication of application: 15.01.2003
(73) Proprietor: SIPA S.p.A., I-31029 Vittorio Veneto (IT)
(72) Inventor: COROCHER, Carlo, I-31015 Conegliano (IT); FISHMAN, Bruce Sipa S.p.A., I-31029 Vittorio Veneto (IT); PECK, Steve Sipa S.p.A., I-31029 Vittorio Veneto (IT); ZOPPAS, Matteo, I-33074 Fontanafredda (IT)
(74) Representative: Giugni, Valter
(86) International application number: PCT/EP2001/002427
(87) International publication number: WO 2001/081066

(56) References cited:
- EP-A- 0 885 707
- US-A- 4 588 367
- US-A- 4 682 945

## Description

The present invention refers to a particular type of nozzle for the injection of a flow of molten plastic substance into one or several moulding cavities.

The present invention applies preferably to nozzles used in machines adapted for moulding at the same time a plurality of plastic articles, ie. the so-called "preforms", that are intended for subsequent processing by blow moulding into appropriate final containers, especially plastic bottles.

Although reference will be made in the following description, mainly for reasons of greater descriptive convenience, to a vertical-drive machine for moulding preforms of plastic material, as this is used in combination with the preliminary steps of melting and extrusion of said plastic material, it will be appreciated that the present invention shall be understood as applying also to horizontal-drive moulding machines or even other kinds of uses, as far as these fall within the scope of the appended claims.

It is generally known in the art that, during the preform moulding operation, use is generally made of a moulding machine comprising a nozzle-carrying plate and a plate provided therebelow for the so-called hot chambers (or hot runners, as they are more particularly known in the art). This plate generally contains said hot runners, ie. the conduits provided to transfer the molten resin from an appropriate extruder. The cavity-carrying plate contains a plurality of cavities into which the flow of plastic resin flowing in from said base plate is injected, wherein said flow of plastic resin is transported between said elements by appropriate respective injection nozzles arranged between said cavity-carrying plate and said nozzle-carrying plate.

The means that are commonly used to hold said nozzles in close contact with the surfaces of said plates include providing said nozzles with threads in view of then fastening them by screwing in, or, as an alternative thereto, the generation of a force between the parallel surfaces of the nozzles and the surfaces of said plates, in such a manner as to enable said nozzles to be locked in position therebetween by pressure.

All such measures are anyway well-known to those skilled in the art and are shortly reviewed here to the sole purpose of more effectively introduce the technical context which the present invention is referring to.

On of the most significant problems concerning the design and the utilization of such nozzles arises from the circumstance that these nozzles are assembled under cold conditions and must start operating with the other organs of the machine while not yet at their rated working or steady-state temperature, without giving rise to losses of molten resin, not even in the initial phases of the process, when the installation has not yet reached its steady-state working conditions.

During operation, the plates that are coupled with said nozzles heat up and, as a result, tend to expand, thereby reducing the available space for the nozzle and, therefore, bringing about a compression that may damage the mutually involved parts.

In view of reducing such a compression effect, the need would arise for a not much tight coupling to be made initially. This, however, might well lead to initial losses of resin, ie. a situation that should on the contrary be prevented in any case, owing to the need for such leaking resin to be immediately removed, under serious losses due to machine downtime and personnel needed for such a task.

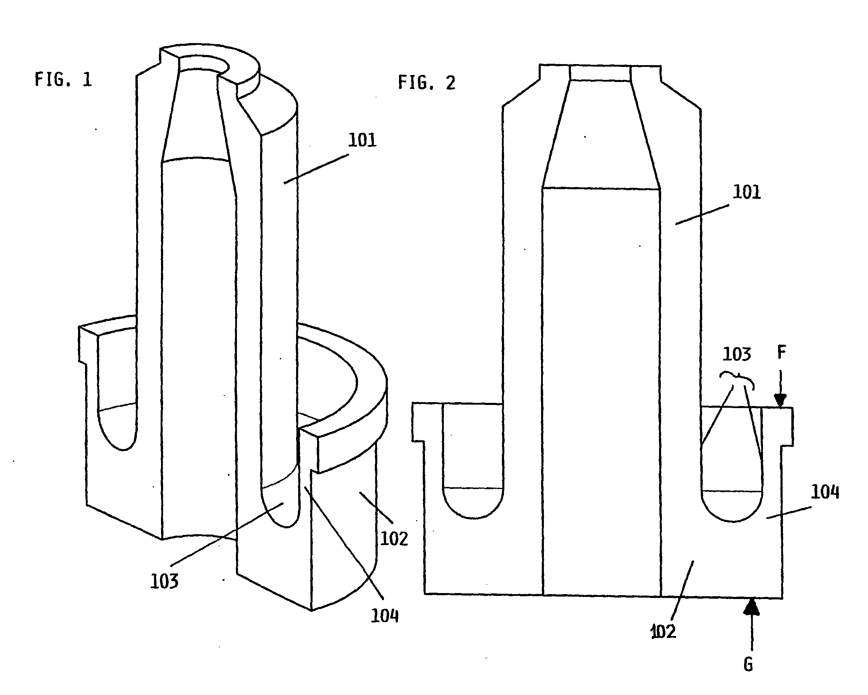

Nozzles for the injection of plastic substances of the kind illustrated in Figures 1 and 2 are known to have been disclosed and to be normally used in the art, in which the nozzle comprises a front central portion 101 and a rear annular portion 102; inside said rear annular portion 102 there is provided a groove 103 that delimitates a wall 104 externally.

When the nozzle is normally coupled between the nozzle-carrying plate 30 and the plate 40 containing the hot runners, said nozzle is submitted to the mutually opposing forces indicated with the letters "F" and "G" in the Figures.

Owing to the structure of said nozzle, the latter withstands the mutually contrasting action of these forces through the compression of said wall 104 and the rear solid portion of said portion 102.

Since the latter is solid, it inherently has a very high compressive strength and, therefore, a practically inexistent ability to deform axially. As far as the wall 104 is concerned, it has a rather small axial dimension and, as a consequence, a correspondingly small compressibility, even if subjected to an elevated compression. In practice, therefore, such a kind of nozzles eventually offers just a reduced ability to deform elastically and, as a result, just a reduced aptitude to take up the dimensional deviations that are introduced between said plates by the thermal expansion processes thereof.

The most relevant state of the art concerning nozzles that are pressure fitted and locked between said plates is disclosed by following patent publications: US 4,558,367 - US 5,220,154 - US 5,554,395 - US 5,759,595 - US 5,820,899.

All these patent publications tackle according to a variety of approaches the issue of finding the best possible solution to the problem of coping with a number of mutually clashing requirements, ie.:
- ensuring protection when starting from cold condition,
- wide range of dimensional tolerances of both plates and nozzles,
- capability of operating within a wider temperature range than the normally involved or used one, including the possibility of reaching overtemperatures of up to 50°C above the normal operating temperature.

However, none of the cited patents appears to be able to solve all of the above mentioned requirements to a satisfactory extent. Furthermore, some of them even call for the use of supplementary sealing means, such as gaskets and the like, which do not solve the problem in any permanent manner, but rather tend to introduce further causes of complication.

Based on the above considerations, it is therefore a main purpose of the present invention to provide a nozzle that enables all of the three above mentioned mutually clashing requirements to be complied with automatically.

A further purpose of the present invention is to provide a nozzle of the above cited kind, which is capable of being easily implemented, used and operated through the use of readily available and, therefore, cost-effective materials and techniques.

Such aims of the present invention, along with further features thereof, are reached in a nozzle that is made and operates as recited in the appended claims.

The present invention may take the form of a preferred, although not sole embodiment such as the one that is described in detail below by way of non-limiting example with reference to the accompanying drawings, in which:
- Figure 3 is a perspective view of a median section of a nozzle according to the present invention;
- Figure 4 is a front view of the section of the nozzle illustrated in Figure 3;
- Figure 5 is a vertical median-section view of an embodiment of the present invention in two distinct working phases thereof;
- Figure 6 is a vertical median-section view of the same embodiment of the present invention in other two distinct working phases thereof, a phase of which is common to a phase illustrated in Figure 5;

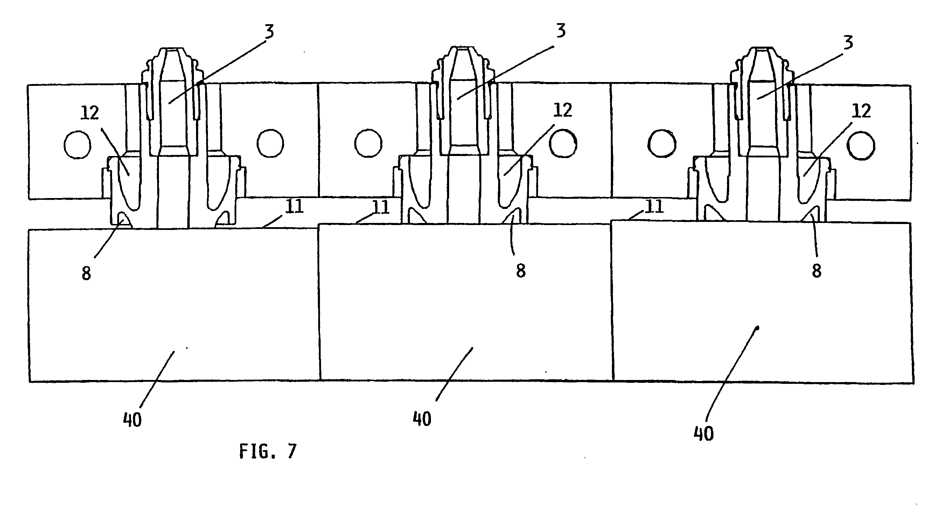

- Figure 7 is a vertical median-section view of the above mentioned embodiment of the present invention, in which all of the three working phases shown in the preceding Figures are represented;
- Figure 8 is a view showing the annular portion as subject to a particular deformation strain under extreme stress conditions.

With reference to the above listed Figures, a nozzle according to the present invention comprises a rear portion 1, a front portion 2 and an inner channel 3 extending through both said portions and adapted to typically carry the flow of molten plastic resin towards one or more injection nozzles 4 arranged on a nozzle-carrying plate 30.

The vertical median section of such a nozzle shows a configuration that is substantially symmetrical with respect to a vertical axis X passing through the centre of said inner channel.

The front portion 2 is substantially elongated, while the rear portion 1 is provided with an outer annular element 5, whose outer profile is substantially a cylindrical one surrounding both said front portion and said inner channel 3.

The outer annular element 5 terminates on its rear side with an at least partially plane terminal surface 7 and, again, the rear portion 1 terminates backwards with a respective plane terminal surface 6 that, in deviation from the afore described prior art, is situated in a more backward position with respect to the plane terminal surface 6 of said annular element,

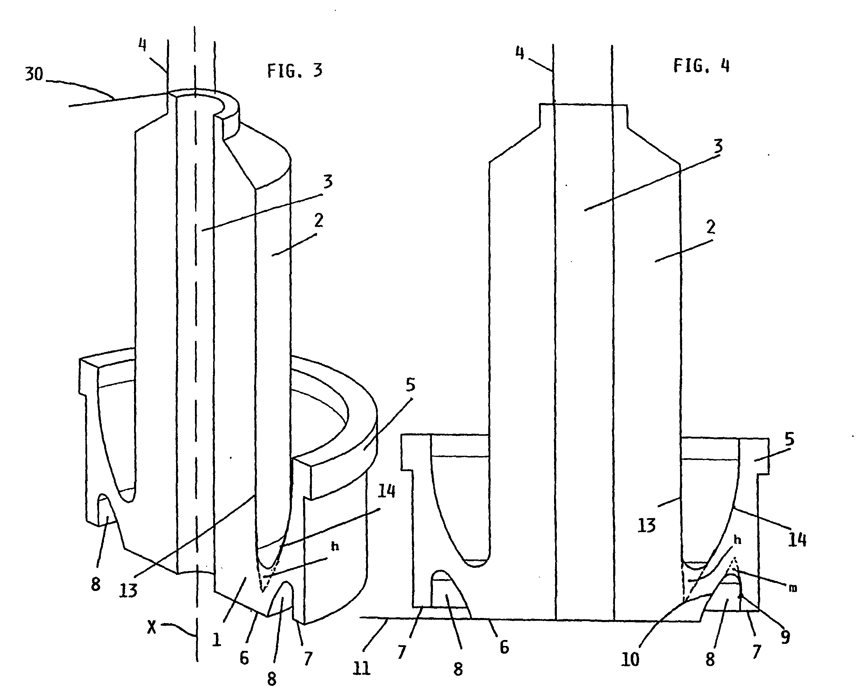

With reference to the two sectional views illustrated in Figures 3 and 4, between said annular element 5 and the outer surface of said front portion there is provided an annular groove 12 which, according to a feature of the present invention, is formed at an acute angle h, in which the inner side 13 is substantially parallel to the axis X of said nozzle, and the outer side 14 is inclined with respect to the same axis, with an inclination that opens apart towards the front end portion of said nozzle.

Between said annular element 5, and namely between the at least partially plane terminal surface 7 thereof and plane terminal surface 6, according to the present invention there is also provided a second annular groove 8 that is substantially coaxial with the axis X of the nozzle.

In a preferred manner, such a second groove is formed in such a manner as to ensure that the median axial section thereof has a shape at an acute angle m, in which the outer side 9 is substantially parallel to the axis X of said nozzle, and the inner side 10 is inclined with respect to the same axis, with an inclination that opens apart towards the rear end portion of said nozzle.

In normal use, this nozzle is press-fitted and locked between the upper portion of said nozzle-carrying plate 30 and the lower portion of the surface 11 that delimitates on top the hot-runner plate 40.

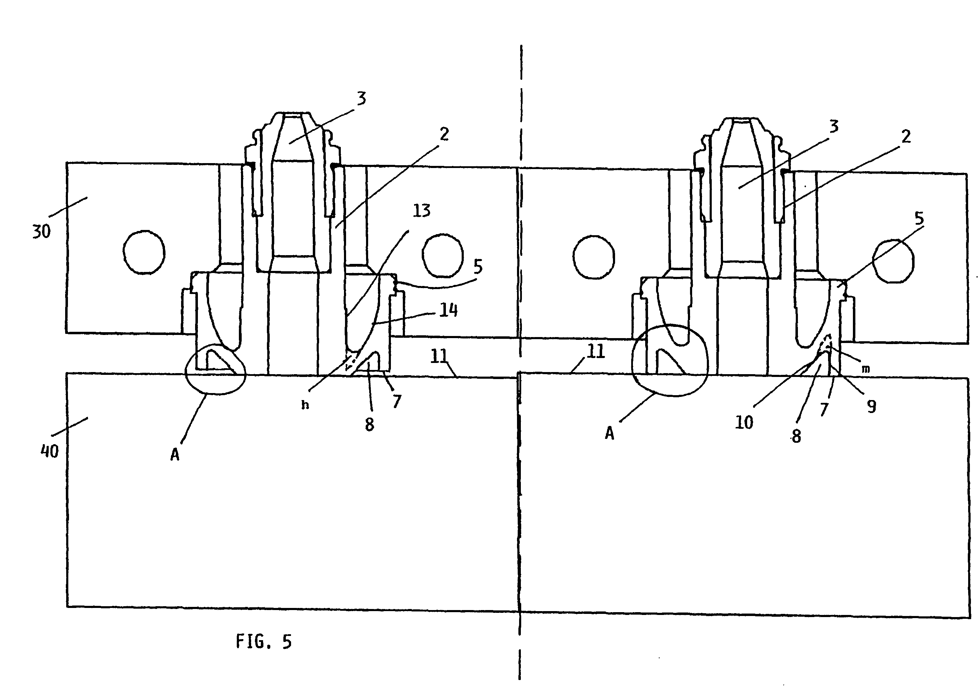

As this can be inferred from a mutual comparison of the two sectional views illustrated in Figure 5, following the resting surface 11 being raised, such a configuration of the nozzle allows for the circled portion, generally indicated at A, of said outer annular element to deflect so as to enable said terminal plane surfaces 6 and 7 to become level on the same plane of the common resting surface 11.

Anyway, owing to said raising of said surface being brought about by the thermal expansion incurred during operation, it ensues that such an expansion does not originate any drawback and, in particular, it does not impair the tightness of the nozzle to any extent, since in the initial assembly, and therefore under cold start conditions, such a sealing effect can be ensured by the nozzle being appropriately tightened against said resting surface 11, whereas under normal, ie. steady-state operating conditions the thermal expansion thereof is automatically taken up by the deformation of said circled portion generally indicated at A, as namely allowed for by the provision of said groove 8 and preferably by the particular form used and described above.

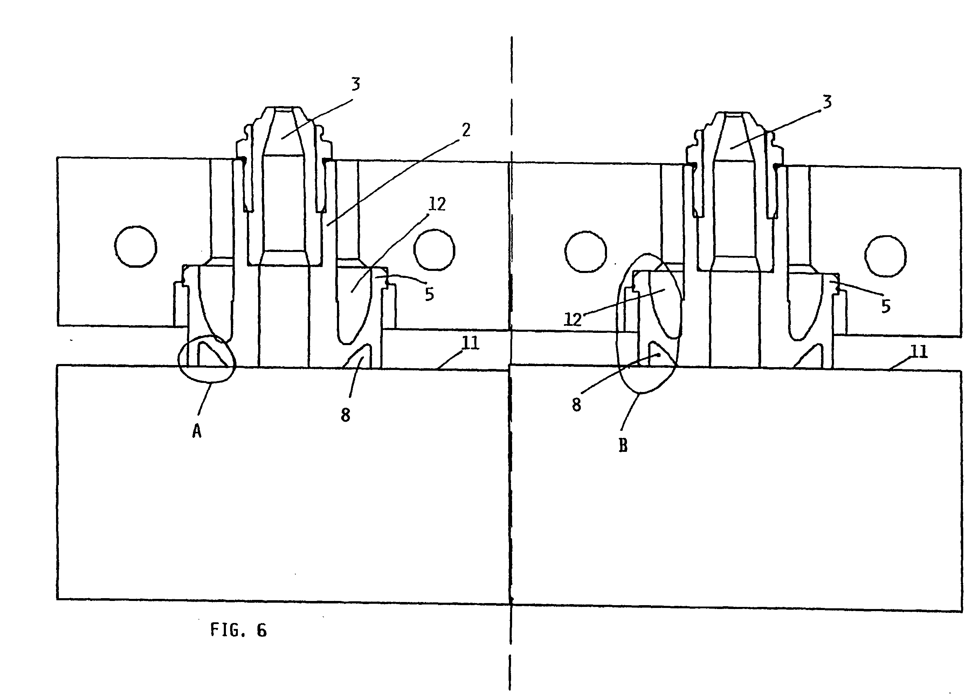

Furthermore, as this can be noticed by comparing with each other the two sectional views illustrated in Figure 6, as a consequence of a further increase in the temperature of the two plates beyond the normal steady-state value, and therefore of a corresponding further raising of the common resting surface 11 bringing about a greater compressive force, such a configuration allows for the circled portion, generally indicated at B, of said outer annular element to appropriately deflect, so as to ensure that the nozzle is both kept firmly in position and retains its tightness against leakages of molten resin, without anyway inducing excessive strains on the other component parts involved.

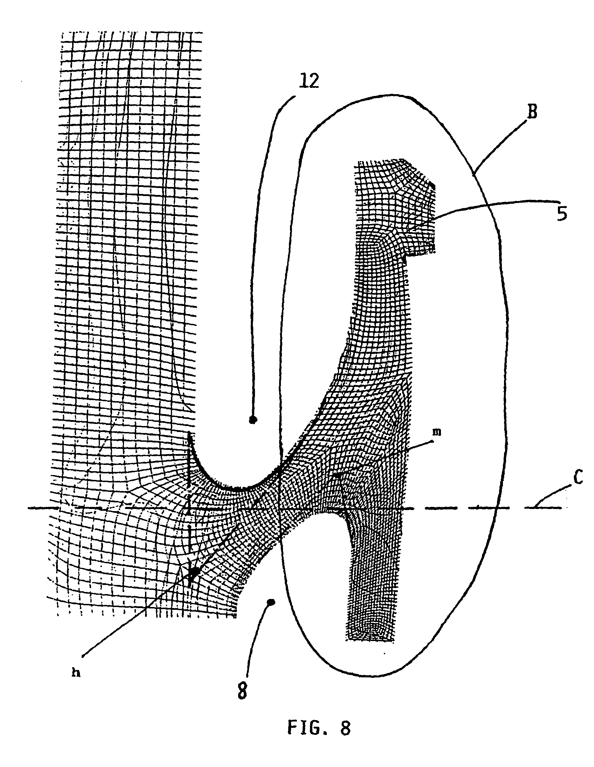

In fact, Figure 8 clearly illustrates the modes of preferential deflection of said zone or portion B under the worst overtemperature conditions, whereas such a deflection would not be allowed for by prior-art nozzles.

The described solution according to the present invention furthermore offers the possibility of a number of advantageous improvements: it has in fact been found experimentally that a maximum result in terms of ability to deform under elevated stress loads is obtained if the acute angles h and m of said first annular groove and said second annular groove, respectively, are sunstantially arranged at the same level C with respect to the axis of said nozzle, in such a manner as to provide a sufficiently thin and, therefore, elastic wall between said two grooves; it has been further found experimentally that an optimum compromise between elasticity and greatest possible deformation, which is a function of the highest acceptable overtemperature, if the depth of said second groove 12 is at least twice the depth of said first groove 8.

Finally, an advantageous configuration of said nozzle has also been obtained by situating said acute angle h of said groove 12 within said acute angle m of said second groove 8.

## Claims

1. Nozzle for injecting molten plastic substance into a mould, and comprising:
- a rear portion (1), a front portion (2) and a melting channel (3) extending therebetween for conveying the molten substance forward towards at least a gate leading to a cavity (4), in which said front portion (2) has an elongated shape and said rear portion is provided with an outer annular element (5), which extends around said inner portion adjacent to said melting channel, and has a substantially cylindrical shape, in which said outer annular element (5) is provided in its forward looking face with a first annular groove (12) arranged between the outer front edge of said annular element and the outer surface of said front portion,
**characterized in that**
- said rear portion terminates in its central zone with a plane surface (6),
- said outer annular element (5) terminates on its rear side with a respective at least partially plane terminal surface (7),
- the plane terminal surface (6) pertaining to said central zone is situated in a more backward position than said at least partially plane terminal surface (7) pertaining to said outer annular element,
- and said outer annular element (5) is provided, in its backward looking face, with a second annular groove (8) arranged between said plane terminal surface (6) of said rear portion and said at least partially plane terminal surface (7) of said outer annular element.

2. Nozzle according to claim 1, **characterized in that** the median axial section of said second annular groove (8) is in the shape of an acute angle, in which the outer side (9) is substantially parallel to the axis (X) of said nozzle, and the inner side (10) is inclined with respect to the same axis, with an inclination that opens apart towards the rear end portion of said nozzle.

3. Nozzle according to claim 2, **characterized in that** the median axial section of said first annular groove (12) is in the shape of an acute angle, in which the inner side (13) is substantially parallel to the axis (X) of said nozzle, and the outer side (14) is inclined with respect to the same axis, with an inclination that opens apart towards the front end portion of said nozzle.

4. Nozzle according to the combination of claims 2 and 3 above, **characterized in that** the acute angles of said first annular groove (12) and said second annular groove (8) are provided on substantially the same level (C) with respect to the axis (X) of said nozzle.

5. Nozzle according to claim 5, **characterized in that** the depth of said first groove (12) is at least twice the depth of said second groove (8).

6. Nozzle according to any of the preceding claims 3 to 5, **characterized in that** said acute angle of said first groove (12) is arranged within said acute angle of said second groove (8).

## Patentansprüche

1. Düse zum Einspritzen geschmolzener Kunststoffsubstanz in eine Form, die umfasst:
einen hinteren Abschnitt (1), einen vorderen Abschnitt (2) und einen Schmelzkanal (3), der sich dazwischen erstreckt, um die geschmolzene Substanz vorwärts auf wenigstens einen Anschnitt zu zu transportieren, der zu einem Hohlraum (4) führt, wobei der vordere Abschnitt (2) eine längliche Form hat und der hintere Abschnitt mit einem äußeren ringförmigen Element (5) versehen ist, das sich um den inneren Abschnitt herum an den Schmelzkanal angrenzend erstreckt und eine im Wesentlichen zylindrische Form hat, wobei das äußere ringförmige Element (5) in seiner nach vom gewandten Außenfläche mit einer ersten Ringnut (12) versehen ist, die zwischen der äußeren Vorderkante des ringförmigen Elementes und der Außenfläche des vorderen Abschnitts angeordnet ist,
**dadurch gekennzeichnet, dass**:
der hintere Abschnitt in seinem mittleren Bereich mit einer planen Fläche (6) endet,
das äußere ringförmige Element (5) an seiner Rückseite mit einer entsprechenden, wenigstens teilweise planen Abschlussfläche (7) endet,
wobei sich die plane Abschlussfläche (6), die zu dem mittleren Bereich gehört, an einer weiter hinter liegenden Position befindet als die wenigstens teilweise plane Abschlussfläche (7), die zu dem äußeren ringförmigen Element gehört,
und das äußere ringförmige Element (6) in seiner nach hinten gewandten Außenfläche mit einer zweiten Ringnut (8) versehen ist, die zwischen der planen Abschlussfläche (6) des hinteren Abschnitts und der wenigstens teilweise planen Abschlussfläche (7) des äußeren ringförmigen Elementes angeordnet ist.

2. Düse nach Anspruch 1, **dadurch gekennzeichnet, dass** der mittlere axiale Abschnitt der zweiten Ringnut (8) die Form eines spitzen Winkels hat, wobei die Außenseite (9) im Wesentlichen parallel zu der Achse (X) der Düse ist und die Innenseite (10) in Bezug auf diese Achse mit einer Neigung geneigt ist, die sich zum hinteren Endabschnitt der Düse hin öffnet.

3. Düse nach Anspruch 2, **dadurch gekennzeichnet, dass** der mittlere axiale Abschnitt der ersten Ringnut (12) die Form eines spitzen Winkels hat, wobei die Innenseite (13) im Wesentlichen parallel zu der Achse (X) der Düse ist und die Außenseite (14) in Bezug auf diese Achse mit einer Neigung geneigt ist, die sich zum vorderen Endabschnitt der Düse hin öffnet.

4. Düse nach der Kombination der Ansprüche 2 und 3, **dadurch gekennzeichnet, dass** die spitzen Winkel der ersten Ringnut (12) und der zweiten Ringnut (8) auf im Wesentlichen der gleichen Höhe (C) in Bezug auf die Achse (X) der Düse vorhanden sind.

5. Düse nach Anspruch 4, **dadurch gekennzeichnet, dass** die Tiefe der ersten Nut (12) wenigstens das Doppelte der Tiefe der zweiten Nut (8) ausmacht.

6. Düse nach einem der vorangehenden Ansprüche 3-5, **dadurch gekennzeichnet, dass** der spitze Winkel der ersten Nut (12) innerhalb des spitzen Winkels der zweiten Nut (8) angeordnet ist.

## Revendications

1. Buse destinée à l'injection d'une substance plastique en fusion à l'intérieur d'un moule, et comprenant :
- une partie arrière (1), une partie avant (2) et un canal pour substance en fusion (3) s'étendant entre elles, afin de convoyer vers l'avant la substance en fusion vers au moins une entrée menant à une cavité (4), dans laquelle ladite partie avant (2) a une forme allongée et ladite partie arrière (1) comporte un élément annulaire externe (5), qui s'étend autour de ladite partie interne située à proximité dudit canal pour substance en fusion, et qui a une forme essentiellement cylindrique, dans laquelle ledit élément annulaire externe (5) comporte dans sa face dirigée vers l'avant une première gorge annulaire (12) aménagée entre le bord avant externe dudit élément annulaire et la surface externe de ladite partie avant,
**caractérisée en ce que**,
- ladite partie arrière se termine dans sa zone centrale par une surface plane (6) ;
- ledit élément annulaire externe (5) se termine sur son côté arrière par une surface terminale respective plane au moins en partie (7) ;
- la surface terminale plane (6) qui fait partie de ladite zone centrale est située dans une position dirigée davantage vers l'arrière que ladite surface terminale plane au moins en partie (7) qui fait partie dudit élément annulaire externe ;
- et ledit élément annulaire externe (5) comporte, sur sa face dirigée vers l'arrière, une seconde gorge annulaire (8) aménagée entre ladite surface terminale plane (6) de ladite partie arrière et ladite surface terminale plane au moins en partie (7) dudit élément annulaire externe.

2. Buse selon la revendication 1, **caractérisée en ce que** la section axiale médiane de ladite seconde gorge annulaire (8) a une forme en angle aigu, dans laquelle le côté externe (9) est essentiellement parallèle à l'axe (X) de ladite buse, et dans laquelle le côté interne (10) est incliné par rapport au même axe, avec une inclinaison qui s'ouvre en séparation vers la partie d'extrémité arrière de ladite buse.

3. Buse selon la revendication 2, **caractérisée en ce que** la section axiale médiane de ladite première gorge annulaire (12) a une forme en angle aigu, dans laquelle le côté interne (13) est essentiellement parallèle à l'axe (X) de ladite buse, et dans laquelle le côté externe (14) est incliné par rapport au même axe, avec une inclinaison qui s'ouvre en séparation vers la partie d'extrémité avant de ladite buse.

4. Buse selon l'ensemble des revendications 2 et 3 indiquées ci-dessus, **caractérisée en ce que** les angles aigus de ladite première gorge annulaire (12) et de ladite seconde gorge annulaire (8) sont aménagés essentiellement sur le même niveau (C) par rapport à l'axe (X) de ladite buse.

5. Buse selon la revendication 5, **caractérisée en ce que** la profondeur de ladite première gorge (12) est au moins égale à deux fois la profondeur de ladite seconde gorge annulaire (8).

6. Buse selon l'une quelconque des revendications précédentes 3 à 5, **caractérisée en ce que** ledit angle aigu de ladite première gorge (12) est disposé à l'intérieur dudit angle aigu de ladite seconde gorge (8).
